# EUROPÄISCHE PATENTSCHRIFT

(11) **EP 4 505 086 B1**
(45) Veröffentlichungstag und Bekanntmachung des Hinweises auf die Patenterteilung: **30.07.2025**
(21) Anmeldenummer: 23731621.1
(22) Anmeldetag: 07.06.2023
(51) Int. Cl.: F16B 21/18, F16B 43/00, F16B 43/02

(54) **SICHERUNGSANORDNUNG EINES SICHERUNGSRINGS FÜR EIN KRAFTFAHRZEUG SOWIE KRAFTFAHRZEUG**
SECURING ARRANGEMENT OF A SECURING RING FOR A MOTOR VEHICLE AND MOTOR VEHICLE
AGENCEMENT DE FIXATION D'UNE BAGUE DE FIXATION POUR UN VÉHICULE À MOTEUR ET VÉHICULE À MOTEUR

(30) Priorität: 07.07.2022 DE 102022002486
(43) Veröffentlichungstag der Anmeldung: 12.02.2025
(73) Patentinhaber: Mercedes-Benz Group AG, 70372 Stuttgart (DE)
(72) Erfinder: SZÖLLÖSI, Patrik, 70178 Stuttgart (DE); WINTER, Dennis, 70329 Stuttgart (DE)
(74) Vertreter: Novagraaf Group
(86) Internationale Anmeldenummer: PCT/EP2023/065267
(87) Internationale Veröffentlichungsnummer: WO 2024/008382

(56) Entgegenhaltungen:
- FR-A- 1 497 512
- US-A1- 2022 065 280
- ANONYMOUS: "Custom Retaining Rings and Wave Springs", 27 June 2022 (2022-06-27), XP002810127, Retrieved from the Internet <URL:https://web.archive.org/web/20220627014158/https://www.smalley.com/custom-parts/ring-options> [retrieved on 20230914]

## Beschreibung

Die Erfindung betrifft eine Sicherungsanordnung eines Sicherungsrings an einem ersten Bauteil und einem zweiten Bauteil für ein Kraftfahrzeug. Des Weiteren betrifft die Erfindung ein Kraftfahrzeug, insbesondere einen Kraftwagen, mit wenigstens einer solchen Sicherungseinrichtung.

Der DE 10 2019 121 294 A1 ist ein Sicherungsring für eine Radialnut in einer Kupplungseinrichtung als bekannt zu entnehmen, wobei die Radialnut durch sich axial erstreckende Finger gebildet wird, die an ihren freien Enden radial nach innen gebogen sind und dort die Radialnut für den Sicherungsring ausbilden.

US 2022/065280 A1 offenbart einen Sicherungsring zur Verwendung außen auf einer Welle oder innen in einer Gehäusebohrung.

Aufgabe der vorliegenden Erfindung ist es, eine Sicherungsanordnung eines Sicherungsrings an einem ersten Bauteil und einem zweiten Bauteil für ein Kraftfahrzeug sowie ein Kraftfahrzeug mit wenigstens einer solchen Sicherungsanordnung zu schaffen, sodass ein besonders großer Funktionserfüllungsumfang realisiert werden kann.

Diese Aufgabe wird durch eine Sicherungsanordnung mit den Merkmalen des Patentanspruchs 1 sowie durch ein Kraftfahrzeug mit den Merkmalen des Patentanspruchs 8 gelöst. Vorteilhafte Ausgestaltungen mit zweckmäßigen Weiterbildungen der Erfindung sind in den Unteransprüchen angegeben.

Ein erster Aspekt der Erfindung betrifft eine Sicherungsanordnung eines Sicherungsrings an einem ersten Bauteil und einem zweiten Bauteil für ein Kraftfahrzeug, insbesondere für einen vorzugsweise als Personenkraftwagen ausgebildeten Kraftwagen. Dies bedeutet, dass das vorzugsweise als Kraftwagen, insbesondere als Personenkraftwagen, ausgebildete und einfach auch als Fahrzeug bezeichnete Kraftfahrzeug in seinem vollständig hergestellten Zustand die Sicherungsanordnung und somit den Sicherungsring, das erste Bauteil und das zweite Bauteil aufweist. Ganz vorzugsweise sind das erste Bauteil und das zweite Bauteil Bauteile einer Kupplungseinrichtung, insbesondere einer Kupplung, des Kraftfahrzeugs. Ganz insbesondere sind der Sicherungsring und die Bauteile Bestandteil einer Klauenbremse, mittels welcher beispielsweise ein Planetenträger eines Planetenradsatzes, insbesondere formschlüssig, drehfest an einem Gehäuse festgelegt und somit gegen eine relativ zu dem Gehäuse erfolgende Drehung gesichert werden kann.

Bei der Sicherungsanordnung ist der Sicherungsring teilweise in einer außenumfangsseitigen Nut des ersten Bauteils angeordnet. Dies bedeutet, dass ein erster Teilbereich des Sicherungsrings insbesondere in radialer Richtung des Sicherungsrings in der Nut des ersten Bauteils angeordnet ist. Ein sich insbesondere in radialer Richtung des Sicherungsrings, insbesondere nach außen, an den ersten Teilbereich anschließender, zweiter Teilbereich des Sicherungsrings ist außerhalb der Nut angeordnet, ragt mithin aus der Nut heraus, sodass der Sicherungsring teilweise aus der Nut herausragt. Unter dem Merkmal, dass die Nut des ersten Bauteils eine außenumfangsseitige Nut des ersten Bauteils ist, ist insbesondere zu verstehen, dass die Nut an einem Außenumfang des ersten Bauteils vorgesehen, insbesondere eingebracht, ist. Somit ist beispielsweise die Nut eine Nut, mithin eine Ausnehmung einer außenumfangsseitigen Mantelfläche des ersten Bauteils, sodass die Nut beispielsweise in radialer Richtung des Sicherungsrings und somit in radialer Richtung der Bauteile nach außen hin offen ist. Die Nut wird auch als Radialnut bezeichnet oder ist als Radialnut ausgebildet. Insbesondere verläuft die Nut in um die axiale Richtung des Sicherungsrings und somit der Bauteile verlaufender Umfangsrichtung vollständig umlaufend um das erste Bauteil herum.

Der Sicherungsring weist, insbesondere genau, zwei freie Enden auf, die, insbesondere in um die axiale Richtung des Sicherungsrings verlaufender Umfangsrichtung des Sicherungsrings, einander gegenüberliegen. Insbesondere sind die freien Enden, insbesondere in Umfangsrichtung des Sicherungsrings, voneinander beabstandet. Der Sicherungsring ist an seinen beiden, einander gegenüberliegenden, freien Enden in dieselbe, in axialer Richtung des Sicherungsrings verlaufender Richtung gebogen. Mit anderen Worten sind die freien Enden in dieselbe, axiale Richtung gebogen oder umgebogen. Unter dem Merkmal, dass die Richtung in axialer Richtung des Sicherungsrings verläuft, ist zu verstehen, dass die Richtung parallel zur axialen Richtung des Sicherungsrings verläuft oder mit der axialen Richtung des Sicherungsrings zusammenfällt.

Die zwei freien Enden des Sicherungsrings greifen, insbesondere dadurch, dass sie axial gebogen oder umgebogen sind, in axialer Richtung des Sicherungsrings in jeweilige, erste axiale Taschen des ersten Bauteils ein. Insbesondere sind die ersten Taschen des ersten Bauteils in axialer Richtung des Sicherungsrings und somit der Bauteile neben der Nut angeordnet, mithin seitlich der Nut angeordnet, sodass die ersten Taschen in axialer Richtung auf die Nut folgen oder sich an die Nut anschließen. Die jeweilige erste Tasche ist in Umfangsrichtung des Sicherungsrings und somit in Umfangsrichtung der Bauteile, insbesondere beidseitig, durch jeweilige, insbesondere als Festkörper ausgebildete, vorzugsweise eigensteife, erste Wandungen des ersten Bauteils begrenzt, sodass die freien Enden in Umfangsrichtung des Sicherungsrings an zumindest zwei der ersten Wandungsbereiche abstützbar oder abgestützt sind. Hierdurch kann eine Relativdrehung zwischen dem Sicherungsring und dem ersten Bauteil vermieden oder zumindest begrenzt werden, und zwar insbesondere sowohl in eine um eine Drehachse verlaufende, erste Drehrichtung als auch in eine um die Drehachse verlaufende, der ersten Drehrichtung entgegengesetzte, zweite Drehrichtung. Dies erfolgt insbesondere dadurch, dass beispielsweise eines der freien Enden in die erste Drehrichtung an einem der ersten Wandungsbereiche einer der ersten Taschen abstützbar oder abgestützt ist, und das andere Ende ist in die zweite Drehrichtung an einem der ersten Wandungsbereiche der anderen der ersten Taschen abstützbar oder abgestützt. Dabei verläuft die Umfangsrichtung des Sicherungsrings um die Drehachse herum, und die Drehachse verläuft in axialer Richtung des Sicherungsrings, wobei beispielsweise die Drehachse mit der axialen Richtung des Sicherungsrings zusammenfällt oder parallel dazu verläuft.

Bei der erfindungsgemäßen Sicherungsanordnung greifen die zwei freien Enden des Sicherungsrings in axialer Richtung des Sicherungsrings und somit der Bauteile in jeweilige, zweite axiale Taschen des zweiten Bauteils ein, wodurch auch eine um die Drehachse verlaufende Relativdrehung zwischen dem Sicherungsring und dem zweiten Bauteil vermieden oder zumindest begrenzt ist. Die vorigen und folgenden Ausführungen zu den ersten Taschen können ohne Weiteres auch auf die zweiten Taschen übertragen werden, sodass beispielsweise die jeweilige, zweite Tasche in Umfangsrichtung des Sicherungsrings und somit der Bauteile, insbesondere beidseitig, durch jeweilige, insbesondere als Festkörper ausgebildete und vorzugsweise formstabile, das heißt eigensteife, zweite Wandungsbereiche des zweiten Bauteils begrenzt ist. Somit ist beispielsweise das eine freie Ende des Sicherungsrings in die erste Drehrichtung an einem der zweiten Wandungsbereiche einer der zweiten Taschen abstützbar oder abgestützt, und das andere freie Ende des Sicherungsrings ist in die zweite Drehrichtung an einem der zweiten Wandungsbereiche der anderen der zweiten Taschen abstützbar oder abgestützt. Da die freien Enden in die ersten Taschen des ersten Bauteils und in die zweiten Taschen des zweiten Bauteils eingreifen, sind auch um die Drehachse verlaufende Relativdrehungen zwischen den Bauteilen vermieden oder begrenzt. Dabei verläuft die genannte Drehachse in axialer Richtung des Sicherungsrings, wobei die Drehachse insbesondere mit der axialen Richtung des Sicherungsrings zusammenfällt. Außerdem sind die Bauteile mittels des Sicherungsrings axial, das heißt in axialer Richtung des Sicherungsrings, aneinander oder relativ zueinander gesichert, sodass axiale Relativbewegungen, das heißt in axialer Richtung des Sicherungsrings erfolgende Relativbewegungen zwischen den Bauteilen mittels des Sicherungsrings vermieden oder zumindest begrenzt sind. Durch die Erfindung kann somit ein besonders großer Funktionserfüllungsumfang realisiert werden. Zum einen ist eine Axialsicherung der Bauteile darstellbar, wobei beispielsweise mittels des Sicherungsrings das zweite Bauteil axial an dem ersten Bauteil gesichert ist oder umgekehrt. Zum anderen wird der Sicherungsring selbst gegen eine Rotation sowohl relativ zu dem ersten Bauteil als auch relativ zu dem zweiten Bauteil gesichert. Außerdem werden die Bauteile mittels des Sicherungsrings gegeneinander oder relativ zueinander gesichert. Dieser große Funktionserfüllungsumfang kann dabei ohne radiale Aufdickung des Sicherungsrings realisiert werden, da der Sicherungsring nicht etwa in radialer Richtung in Ausnehmungen eingreift, sondern in axialer Richtung in die genannten Taschen eingreift.

Das zweite Bauteil ist beispielsweise radial außerhalb des ersten Bauteils angeordnet. Beispielsweise weist das zweite Bauteil einen Innenradius auf, welcher kleiner als ein Außenradius des Sicherungsrings ist. Die ersten Taschen und die zweiten Taschen sind axial gerichtet oder ausgerichtet. Dies bedeutet, dass die jeweilige Tasche eine axiale, mithin eine in axialer Richtung verlaufende Ausnehmung ist, in die das jeweilige Ende axial, das heißt in axialer Richtung des Sicherungsrings eingreift. Der Erfindung liegen dabei insbesondere die folgenden Erkenntnisse und Überlegungen zugrunde: Bei einem Einsatz von Sicherungsringen, beispielsweise in Kupplungseinrichtungen, kann es bei herkömmlichen Lösungen aufgrund von hohen Drehzahlen und aufgrund von dadurch entstehenden Fliehkräften zu einer tangentialen, das heißt in Umfangsrichtung des Sicherungsrings erfolgenden, Rotation des Sicherungsrings kommen, insbesondere relativ zu den Bauteilen, die mittels des Sicherungsrings axial aneinander gesichert sind. Dies kann zu einem erhöhten Verschleiß durch Einarbeiten des Sicherungsrings in die Nut, insbesondere in deren Nutgeometrie, führen. Dieser Einfluss hat negative Auswirkungen auf die Lebensdauer, weshalb diese tangentiale Rotation des Sicherungsrings relativ zu dem die Nut aufweisenden ersten Bauteil vermieden werden sollte. Üblicherweise wird eine übermäßige Rotation des Sicherungsrings relativ zu dem die Nut aufweisenden, ersten Bauteil dadurch gelöst, dass der Sicherungsring eine Verdrehsicherung aufweist, die mindestens eine Querschnittsänderung des Sicherungsrings über dessen Umfang umfasst. In einem Gegenstück, mithin in dem die Nut aufweisenden, ersten Bauteil, in welchem der Sicherungsring teilweise angeordnet ist, muss hierfür eine partielle Nuttiefenerhöhung eingebracht werden. Ein Nachteil dieser Verdrehsicherung ist jedoch, dass die Nut mehr radialen Bauraum benötigt, um die Verdrehsicherung zu realisieren, im Vergleich zu Lösungen, bei welchen die Verdrehsicherung weggelassen wird, wobei es dann jedoch, falls keine entsprechenden Gegenmaßnahmen getroffen sind, zu einer unerwünschten Rotation des Sicherungsrings relativ zu dem ersten Bauteil kommen kann.

Die zuvor genannten Probleme und Nachteile können durch die Erfindung vermieden werden. Zum einen ermöglicht es die Erfindung, unerwünschte Relativdrehungen zwischen den Bauteilen sowie zwischen dem Sicherungsring und dem ersten Bauteil und zwischen dem Sicherungsring und dem zweiten Bauteil zu vermeiden. Dies kann dadurch realisiert werden, dass die Enden in die axialen Taschen eingreifen, wodurch eine Verdrehsicherung des Sicherungsrings sowohl gegenüber dem ersten Bauteil als auch gegenüber dem zweiten Bauteil realisiert ist und wodurch eine Verdrehsicherung des ersten Bauteils gegenüber dem zweiten Bauteil beziehungsweise umgekehrt realisiert ist. Diese Verdrehsicherung kann realisiert werden, ohne dass es zu einem übermäßigen radialen Bauraumbedarf kommt, da Querschnittsänderungen des Sicherungsrings über dessen Umfang sowie eine partielle Nuttiefenerhöhung der Nut vermieden werden können. Mit anderen Worten kann der große Funktionserfüllungsumfang ohne radiale Bauraumerhöhung wie bei einem Sicherungsring ohne Verdrehsicherung realisiert werden.

Um eine übermäßige Relativdrehung zwischen dem Sicherungsring und dem jeweiligen Bauteil sowie zwischen den Bauteilen besonders sicher vermeiden zu können, ist es bei einer Ausführungsform der Erfindung vorgesehen, dass der Sicherungsring an seinen beiden, einander gegenüberliegenden, freien Enden in dieselbe, in axialer Richtung des Sicherungsrings verlaufender Richtung um wenigstens oder genau 10° gebogen ist. Mit anderen Worten ist es vorzugsweise vorgesehen, dass die freien Enden in dieselbe axiale Richtung um wenigstens oder genau 10° gebogen oder umgebogen sind.

Die Erfindung ist eine effiziente Methode, um radialen Bauraum einzusparen und gleichzeitig den Sicherungsring sowie die Bauteile gegen tangentiale Bewegungen, mithin gegen Rotationen abzusichern.

Vorzugsweise ist der Sicherungsring aus einem metallischen Werkstoff, insbesondere aus einem Stahl, gebildet. Ferner ist es vorzugweise vorgesehen, dass der Sicherungsring einstückig ausgebildet ist. Mit anderen Worten ist der Sicherungsring vorzugsweise aus einem einzigen Stück gebildet, sodass der Sicherungsring durch einen Monoblock gebildet oder als ein Monoblock ausgebildet ist. Mit anderen Worten ist der Sicherungsring vorzugsweise als in integraler Körper, mithin als ein integral hergestellter oder ausgebildeter Körper ausgebildet.

Eine weitere Ausführungsform zeichnet sich dadurch aus, dass das erste Bauteil eine Schiebemuffe für die zuvor genannte Klauenbremse einer Getriebeeinrichtung des Kraftfahrzeugs ist, wobei das zweite Bauteil ein Betätigungskolben für die Schiebemuffe oder ein Verbindungselement zwischen der Schiebemuffe und dem Betätigungskolben ist. Insbesondere ist es denkbar, dass mittels des Verbindungselements die Schiebemuffe mit dem Betätigungskolben verbunden ist. Hierdurch kann eine besonders effektive und effiziente Sicherung realisiert werden.

Dabei hat es sich als besonders vorteilhaft gezeigt, wenn der Bestätigungskolben und das Verbindungselement einstückig miteinander ausgebildet sind. Mit anderen Worten ist es vorzugsweise vorgesehen, dass der Betätigungskolben und das Verbindungselement aus einem einzigen Stück gebildet sind, sodass der Betätigungskolben und das Verbindungselement nicht etwa aus separat voneinander ausgebildeten und miteinander verbundenen Teilen zusammengesetzt sind, sondern der Betätigungskolben und das Verbindungselement sind als ein Monoblock ausgebildet oder durch einen Monoblock gebildet. Dadurch kann der Bauraumbedarf besonders gering gehalten werden.

Um eine besonders effiziente und effektive Drehsicherung auf besonders kostengünstige Weise realisieren zu können, ist es in weiterer Ausgestaltung der Erfindung vorgesehen, dass das Verbindungselement und der Betätigungskolben separat voneinander ausgebildet und drehfest miteinander verbunden sind. Außerdem sind dabei das Verbindungselement und der Betätigungskolben in axialer Richtung des Sicherungsrings relativ zueinander unbeweglich, mithin fest miteinander verbunden, sodass axiale Relativbewegungen zwischen dem Verbindungselement und dem Betätigungskolben vermieden beziehungsweise unterbunden sind.

Bei einer weiteren, besonders vorteilhaften Ausführungsform der Erfindung weist das erste Bauteil an seinem Außenumfang einen in Umfangsrichtung des ersten Bauteils, insbesondere vollständig, umlaufenden Steg auf, welcher sich beispielsweise in radialer Richtung nach außen hin von der Nut beziehungsweise von einem an die Nut und/oder den Steg angrenzenden Oberflächenbereich wegerstreckt. Beispielsweise schließt sich der Steg in axialer Richtung an die Nut an. Insbesondere ist denkbar, dass die ersten Taschen in dem Steg ausgebildet sind. Hierdurch kann eine kostengünstige und einfach montierbare sowie axial verschiebefeste Verbindung zwischen der Schiebemuffe und dem Betätigungskolben beziehungsweise dem Verbindungselement dargestellt werden.

Auf dem Betätigungskolben oder dem Verbindungselement kann beispielsweise ein Magnet, insbesondere ein Permanentmagnet, für eine Erfassung einer axialen Position des Betätigungskolbens beziehungsweise des Verbindungselements vorgesehen sein, wobei sich der Magnet in einem Betrieb sicher nicht aus einem Sensorfeld eines Sensors zum Erfassen des Magneten wegdreht, sodass eine Signalerfassung stets möglich ist. Um übermäßige Relativdrehungen auf besonders kostengünstige Weise realisieren zu können, ist es in weiterer Ausgestaltung der Erfindung vorgesehen, dass der Sicherungsring aus einem Stangenprofil mit konstantem Querschnitt gebildet ist.

Ein zweiter Aspekt der Erfindung betrifft ein vorzugsweise als Kraftwagen, insbesondere als Personenkraftwagen, ausgebildetes Kraftfahrzeug, welches wenigstens eine Sicherungsanordnung gemäß dem ersten Aspekt der Erfindung aufweist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnung(en). Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Zeichnung zeigt in:
- Fig. 1: eine schematische Perspektivansicht einer Sicherungsanordnung eines Sicherungsrings an einem ersten Bauteil und einem zweiten Bauteil;
- Fig. 2: ausschnittsweise eine weitere schematische Perspektivansicht der Sicherungsanordnung;
- Fig. 3: ausschnittsweise eine schematische und geschnittene Perspektivansicht der Sicherungsanordnung;
- Fig. 4: ausschnittsweise eine weitere schematische Perspektivansicht der Sicherungsanordnung;
- Fig. 5: eine schematische Perspektivansicht des Sicherungsrings;
- Fig. 6: ausschnittsweise eine schematische Perspektivansicht des Sicherungsrings;
- Fig. 7: eine schematische Draufsicht des Sicherungsrings; und
- Fig. 8: eine schematische und geschnittene Seitenansicht des Sicherungsrings.

In den Figuren sind gleiche oder funktionsgleiche Elemente mit gleichen Bezugszeichen versehen.

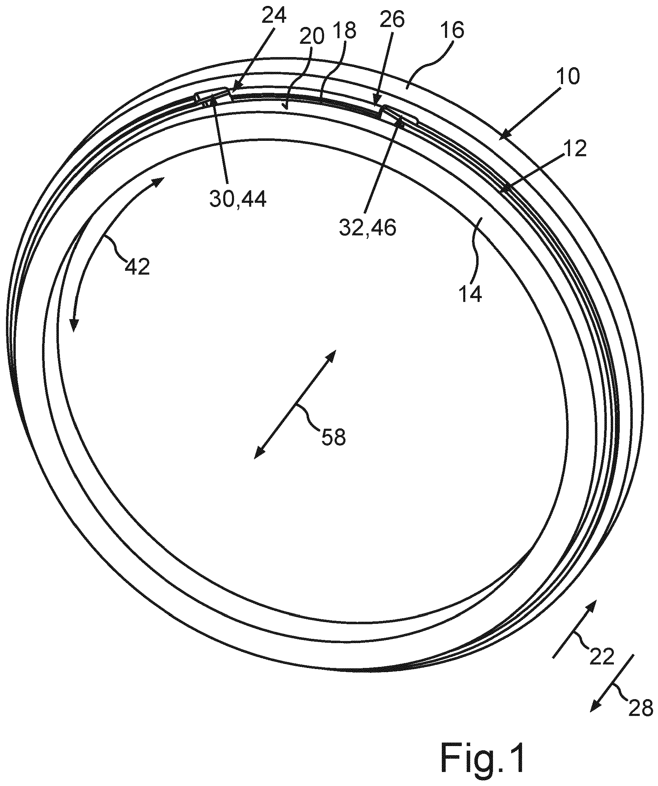

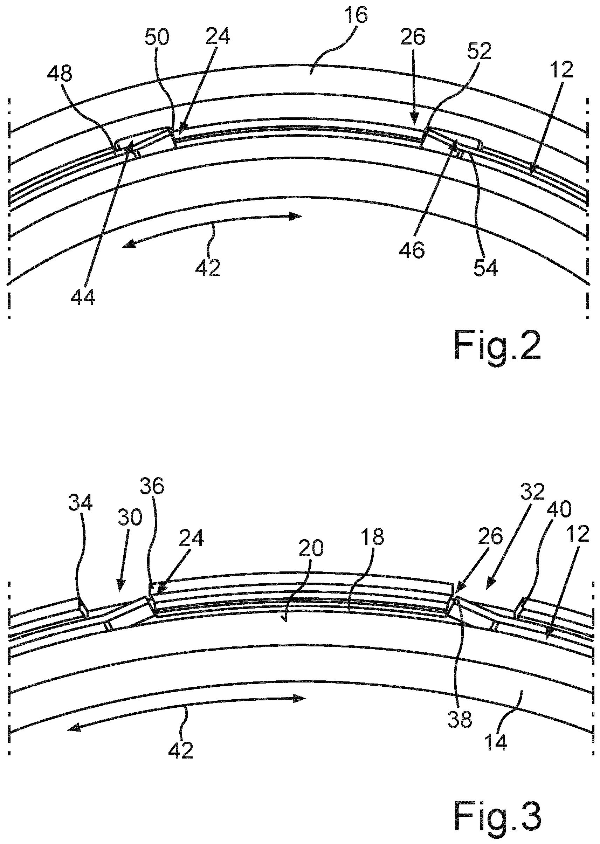

Fig. 1 zeigt in einer schematischen Perspektivansicht eine Sicherungsanordnung 10 eines Sicherungsrings 12 an einem ersten Bauteil 14 und einem zweiten Bauteil 16 eines vorzugsweise als Kraftwagen, insbesondere als Personenkraftwagen, ausgebildeten Kraftfahrzeugs. Das Kraftfahrzeug wird einfach auch als Fahrzeug bezeichnet. Beispielsweise sind der Sicherungsring 12 und die Bauteile 14 und 16 Bestandteile einer Getriebeeinrichtung, insbesondere einer beispielsweise als Klauenbremse ausgebildeten Koppeleinrichtung der Getriebeeinrichtung. Besonders gut in Zusammenschau mit Figuren 2 und 3 ist erkennbar, dass der Sicherungsring 12 bei der Sicherungsanordnung 10 in einer auch als Radialnut bezeichneten oder als Radialnut ausgebildeten Nut 18 des ersten Bauteils 14 teilweise angeordnet ist, wobei der Sicherungsring 12 entlang seiner radialen Richtung und dabei insbesondere in radialer Richtung des Sicherungsrings 12 nach außen hin teilweise aus der Nut 18 und somit aus dem Bauteil 14 herausragt. Dies bedeutet, dass ein erster Teilbereich des Sicherungsrings 12 in Nut 18 in radialer Richtung des Sicherungsrings 12 und somit der Bauteile 14 und 16 eingreift, mithin in der Nut 18 angeordnet ist. Ein zweiter Teilbereich des Sicherungsrings 12 ist außerhalb der

Nut 18 angeordnet und ragt insbesondere in radialer Richtung des Sicherungsrings 12 nach außen hin aus der Nut 18 und somit aus dem Bauteil 14 heraus. Dadurch, dass der Sicherungsring 12 teilweise in der Nut 18 angeordnet ist, sind axiale Relativbewegungen zwischen dem einfach auch als Ring bezeichneten Sicherungsring 12 und dem Bauteil 14 zumindest begrenzt oder vermieden. Unter den axialen Relativbewegungen zwischen dem Sicherungsring 12 und dem Bauteil 14 sind in axialer Richtung des Sicherungsrings 12 und somit der Bauteile 14 und 16 erfolgende Relativbewegungen zwischen dem Ring und dem Bauteil 14 zu verstehen. Die Nut 18 verläuft dabei in um die axiale Richtung des Sicherungsrings 12 und somit der Bauteile 14 und 16 verlaufender Umfangsrichtung des Sicherungsrings 12 und somit der Bauteile 14 und 16 vollständig um das Bauteil 14 um. Es ist erkennbar, dass die Nut 18 in einer außenumfangsseitigen Mantelfläche 20 des Bauteils 14 ausgebildet und somit an einem Außenumfang des Bauteils 14 vorgesehen ist. Zumindest ein Teilbereich des zweiten Bauteils 16 ist zumindest in eine in axialer Richtung des Sicherungsrings 12 und der Bauteile 14 und 16 verlaufende und in Fig. 1 durch einen Pfeil 22 veranschaulichte Richtung durch den Sicherungsring 12, insbesondere durch den zweiten Teilbereich des Sicherungsrings 12 überlappt, wodurch zumindest in die durch den Pfeil 22 veranschaulichte Richtung verlaufende, axiale Relativbewegungen zwischen den Bauteilen 14 und 16 vermieden oder zumindest begrenzt sind. Dies bedeutet, dass mittels des Sicherungsrings 12 eine Axialsicherung der Bauteile 14 und 16 aneinander realisiert ist.

Wie besonders gut aus Figuren 2 bis 8 erkennbar ist, ist der Sicherungsring 12 an seinen beiden, einander in um die axiale Richtung des Sicherungsrings 12 und der Bauteile 14 und 16 verlaufender Umfangsrichtung des Sicherungsrings 12 gegenüberliegende, freien Enden 24 und 26 in dieselbe, in axialer Richtung des Sicherungsrings 12 verlaufende, in Fig. 1 durch einen Pfeil 28 veranschaulichte und auch als Biegerichtung bezeichnete Richtung gebogen ist, wobei die Biegerichtung der durch den Pfeil 22 veranschaulichten Richtung entgegengesetzt ist. Aus Figuren 2 und 3 ist erkennbar, dass die freien Enden 26 in axialer Richtung des Sicherungsrings 12 und somit der Bauteile 14 und 16 in jeweilige, erste axiale Taschen 30 und 32 des ersten Bauteils 14 eingreifen. Wenn im Folgenden die Rede von der axialen Richtung ist, so ist darunter, falls nichts Anderes angegeben ist, die axiale Richtung des Sicherungsrings 12 und somit der Bauteile 14 und 16 zu verstehen.

Es ist erkennbar, dass die Tasche 30 in Umfangsrichtung des Sicherungsrings 12 und somit der Bauteile 14 und 16 beidseits durch Wandungsbereiche 34 und 36 des Bauteils 14 begrenzt ist. Die Tasche 32 ist in Umfangsrichtung des Sicherungsrings 12 beidseitig durch jeweilige Wandungsbereiche 38 und 40 des Bauteils 14 begrenzt. Die Umfangsrichtung des Sicherungsrings 12 und der Bauteile 14 und 16 verläuft um die axiale Richtung und ist beispielsweise in Fig. 2 durch einen Doppelpfeil 42 veranschaulicht.

Es ist erkennbar, dass das freie Ende 24 in eine erste in Umfangsrichtung des Sicherungsrings 12 verlaufende Drehrichtung, insbesondere direkt, an dem Wandungsbereich 36 abstützbar oder abgestützt ist. In eine der ersten Drehrichtung entgegengesetzte und in Umfangsrichtung des Sicherungsrings 12 verlaufende, zweite Drehrichtung ist das freie Ende 26 des Sicherungsring 12, insbesondere direkt, an dem Wandungsbereich 38 abstützbar oder abgestützt. Dadurch können sowohl in die erste Drehrichtung als auch in die zweite Drehrichtung Relativdrehungen zwischen dem Sicherungsring 12 und dem Bauteil 14 um eine mit der axialen Richtung zusammenfallende Drehachse vermieden werden.

Beispielsweise aus Fig. 2 ist erkennbar, dass die freien Enden 24 und 26 außerdem in axialer Richtung in jeweilige, zweite axiale Taschen 44 und 46 des zweiten Bauteils 16 eingreifen. Die axiale Tasche 44 des Bauteils 16 ist in Umfangsrichtung des Sicherungsrings 12 beidseitig durch jeweilige Wandungsbereiche 48 und 50 des Bauteils 16 begrenzt. Die Tasche 46 des Bauteils 16 ist in Umfangsrichtung des Sicherungsrings 12 beidseitig durch jeweilige Wandungsbereiche 52 und 54 des Bauteils 16 begrenzt. Dabei ist das freie Ende 24 in die erste Drehrichtung an dem Wandungsbereich 50, insbesondere direkt, abstützbar oder abgestützt, und in die zweite Drehrichtung ist das freie Ende 26, insbesondere direkt, an dem Wandungsbereich 52 abstützbar oder abgestützt. Dadurch können auch Relativdrehungen zwischen dem Sicherungsring 12 und dem Bauteil 16 sowohl in die erste Drehrichtung als auch in die zweite Drehrichtung um die Drehachse vermieden werden. Außerdem können hierdurch um die Drehachse erfolgende Relativdrehungen zwischen den Bauteilen 14 und 16 sowohl in die erste Drehrichtung als auch in die zweite Drehrichtung vermieden werden. Die genannten Relativdrehungen können insbesondere formschlüssig vermieden werden, da die freien Enden 24, 26 in die Taschen 30, 32, 44 und 46 eingreifen.

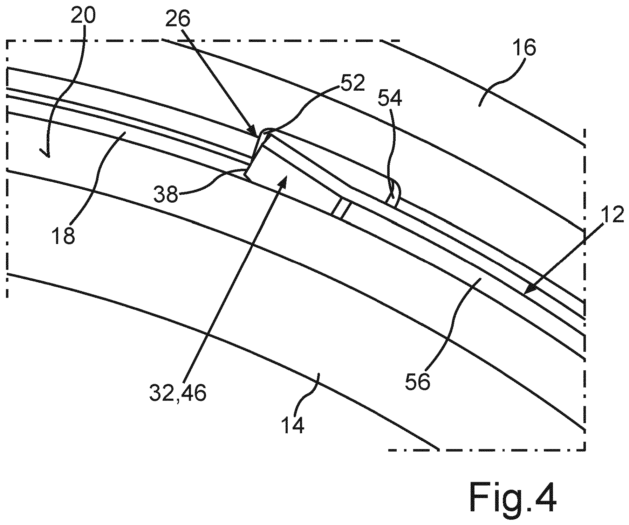

Um die Relativdrehungen besonders effektiv und effizient vermeiden zu können, sind die freien Enden 24, 26 in die Biegerichtung um wenigstens oder genau 10° gebogen. Besonders gut aus Fig. 4 ist erkennbar, dass beispielsweise das freie Ende 26 sowohl in die Taschen 32 als auch in die Tasche 46 eingreift. In Fig. 4 ist der aus der Nut 18 herausragende, zweite Teilbereich des Sicherungsrings 12 mit 56 bezeichnet.

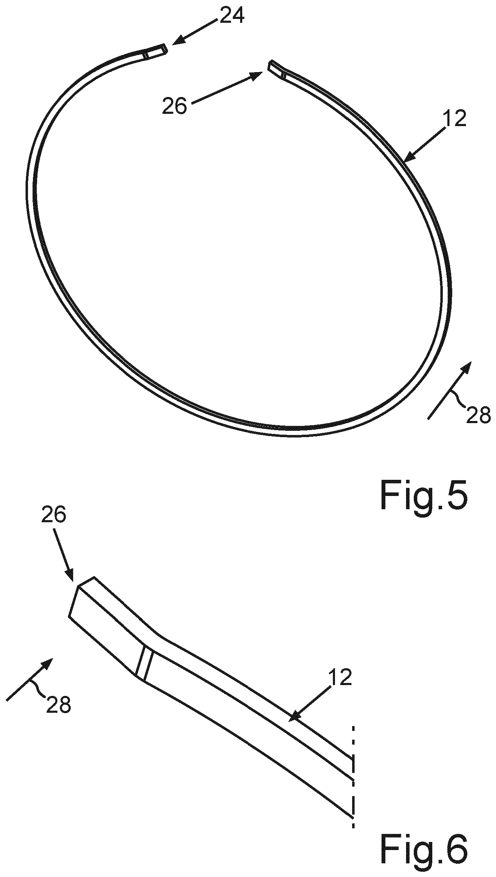

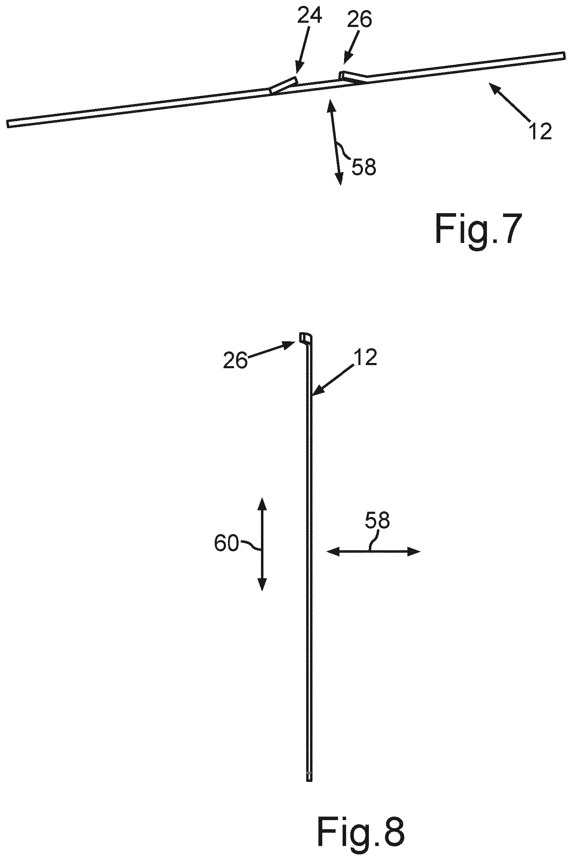

Fig. 5 zeigt den Sicherungsring 12 in einer schematischen Perspektivansicht. Besonders gut aus Fig. 5 ist erkennbar, dass die freien Enden 24 und 26 in dieselbe, durch den Pfeil 28 veranschaulichte Richtung (Biegerichtung) gebogen sind. Außerdem ist aus Fig. 5 erkennbar, dass der Sicherungsring 12 einstückig ausgebildet ist. Insbesondere ist der Sicherungsring 12 aus einem Stangenprofil mit konstantem Querschnitt gebildet. In Fig. 6 ist das umgebogene, freie Ende 26 des Sicherungsrings 12 erkennbar. Fig. 7 zeigt den Sicherungsring 12 in einer schematischen Draufsicht, wobei besonders gut die Enden 26 und insbesondere deren Biegung erkennbar sind. Außerdem ist in Fig. 7 die axiale Richtung durch einen Doppelpfeil 58 veranschaulicht. In Fig. 8 erkennbar ist das freie Ende 26. In Fig. 8 ist durch einen Doppelpfeil 60 die senkrecht zur axialen Richtung verlaufende, radiale Richtung des Sicherungsrings 12 und somit der Bauteile 14 und 16 veranschaulicht. Besonders gut aus Fig. 8 ist erkennbar, dass der Sicherungsring 12, insbesondere der gesamte Sicherungsring 12, einen insbesondere konstanten und Beispielsweise rechteckigen Querschnitt aufweist.

### Bezugszeichenliste

- 10: Sicherungsanordnung
- 12: Sicherungsring
- 14: erstes Bauteil
- 16: zweites Bauteil
- 18: Nut
- 20: außenumfangsseitige Mantelfläche
- 22: Pfeil
- 24: freies Ende
- 26: freies Ende
- 28: Pfeil
- 30: Tasche
- 32: Tasche
- 34: Wandungsbereich
- 36: Wandungsbereich
- 38: Wandungsbereich
- 40: Wandungsbereich
- 42: Doppelpfeil
- 44: Tasche
- 46: Tasche
- 48: Wandungsbereich
- 50: Wandungsbereich
- 52: Wandungsbereich
- 54: Wandungsbereich
- 56: zweiter Teilbereich
- 58: Doppelpfeil
- 60: Doppelpfeil

## Patentansprüche

1. Sicherungsanordnung (10) eines Sicherungsrings (12) an einem ersten Bauteil (14) und einem zweiten Bauteil (16) für ein Kraftfahrzeug, bei welcher:
- der Sicherungsring (12) teilweise in einer außenumfangsseitigen Nut (18) des ersten Bauteils (14) angeordnet ist;
- der Sicherungsring (12) an seinen beiden, einander gegenüberliegenden, freien Enden (24, 26) in dieselbe, in axialer Richtung (58) des Sicherungsrings (12) verlaufende Richtung (28) gebogen ist;
- die zwei freien Enden (24, 26) des Sicherungsrings (12) in axialer Richtung (58) des Sicherungsrings (12) in jeweilige, erste axiale Taschen (30, 32) des ersten Bauteils (14) eingreifen; und
- die zwei freien Enden (24, 26) des Sicherungsrings in axialer Richtung (58) des Sicherungsrings (12) in jeweilige, zweite axiale Taschen (44, 46) des zweiten Bauteils (16) eingreifen.

2. Sicherungsanordnung (10) nach Anspruch 1,
**dadurch gekennzeichnet, dass**
der Sicherungsring (12) an seinen beiden, einander gegenüberliegenden, freien Enden (24, 26) in dieselbe, in axialer Richtung (58) des Sicherungsrings (12) verlaufende Richtung (28) um wenigstens oder genau 10 Grad gebogen ist.

3. Sicherungsanordnung (10) nach Anspruch 1 oder 2,
**dadurch gekennzeichnet, dass**
das erste Bauteil (14) ist eine Schiebemuffe für eine Klauenbremse einer Getriebeeinrichtung ist, wobei das zweite Bauteil (16) ein Betätigungskolben für die Schiebemuffe oder ein Verbindungselement zwischen der Schiebemuffe und dem Betätigungskolben ist.

4. Sicherungsanordnung (10) nach Anspruch 3,
**dadurch gekennzeichnet, dass**
der Betätigungskolben und das Verbindungselement einstückig miteinander ausgebildet sind.

5. Sicherungsanordnung (10) nach Anspruch 3,
**dadurch gekennzeichnet, dass**
das Verbindungselement und der Betätigungskolben separat voneinander ausgebildet und drehfest und in axialer Richtung (58) des Sicherungsrings (12) relativ zueinander unbeweglich miteinander verbunden sind.

6. Sicherungsanordnung (10) nach einem der vorhergehenden Ansprüche,
**dadurch gekennzeichnet, dass**
das erste Bauteil (14) an seinem Außenumfang einen in Umfangsrichtung (42) des ersten Bauteils (14) umlaufenden Steg aufweist.

7. Sicherungsring (10) nach einem der vorhergehenden Ansprüche,
**dadurch gekennzeichnet, dass**
der Sicherungsring (12) aus einem Stangenprofil mit konstantem Querschnitt gebildet ist.

8. Kraftfahrzeug, mit wenigstens einer Sicherungsanordnung (10) nach einem der vorhergehenden Ansprüche.

## Claims

1. Retaining arrangement (10) of a retaining ring (12) on a first component (14) and a second component (16) for a motor vehicle, in which:
- the retaining ring (12) is partly arranged in an outer peripheral groove (18) of the first component (14);
- the retaining ring (12) is bent at its two opposite free ends (24, 26) in the same direction (28) extending in the axial direction (58) of the retaining ring (12);
- the two free ends (24, 26) of the retaining ring (12) engage in the axial direction (58) of the retaining ring (12) into respective first axial pockets (30, 32) of the first component (14); and
- the two free ends (24, 26) of the retaining ring engage in the axial direction (58) of the retaining ring (12) into respective second axial pockets (44, 46) of the second component (16).

2. Retaining arrangement (10) according to claim 1,
**characterized in that**
the retaining ring (12) is bent at its two opposite free ends (24, 26) in the same direction (28) extending in the axial direction (58) of the retaining ring (12) by at least or exactly 10 degrees.

3. Retaining arrangement (10) according to either claim 1 or claim 2,
**characterized in that**
the first component (14) is a sliding sleeve for a claw brake of a transmission device, the second component (16) being an actuating piston for the sliding sleeve or a connecting element between the sliding sleeve and the actuating piston.

4. Retaining arrangement (10) according to claim 3,
**characterized in that**
the actuating piston and the connecting element are formed integrally with each other.

5. Retaining arrangement (10) according to claim 3,
**characterized in that**
the connecting element and the actuating piston are formed separately from one another and are connected to one another against rotation and so as to be immovable in the axial direction (58) of the retaining ring (12) relative to one another.

6. Retaining arrangement (10) according to any of the preceding claims,
**characterized in that**
the first component (14) has on its outer periphery a ridge running in the circumferential direction (42) of the first component (14).

7. Retaining ring (10) according to any of the preceding claims,
**characterized in that**
the retaining ring (12) is formed from a rod profile with a constant cross-section.

8. Motor vehicle comprising at least one retaining arrangement (10) according to any of the preceding claims.

## Revendications

1. Système de sécurité (10) d'une bague de sécurité (12) sur un premier composant (14) et un second composant (16) pour un véhicule automobile, dans lequel :
- la bague de sécurité (12) est partiellement disposée dans une rainure (18) côté circonférentiel extérieur du premier composant (14) ;
- la bague de sécurité (12) est pliée, au niveau de ses deux extrémités libres (24, 26) opposées l'une à l'autre, dans la même direction (28) s'étendant dans la direction axiale (58) de la bague de sécurité (12) ;
- les deux extrémités libres (24, 26) de la bague de sécurité (12) viennent en prise dans une première encoche (30, 32) axiale respective du premier composant (14) dans la direction axiale (58) de la bague de sécurité (12) ; et
- les deux extrémités libres (24, 26) de la bague de sécurité viennent en prise dans une seconde encoche (44, 46) axiale respective du second composant (16) dans la direction axiale (58) de la bague de sécurité (12).

2. Système de sécurité (10) selon la revendication 1,
**caractérisé en ce que**
la bague de sécurité (12) est pliée, au niveau de ses deux extrémités libres (24, 26) opposées l'une à l'autre, dans la même direction (28) s'étendant dans la direction axiale (58) de la bague de sécurité (12) à au moins ou à exactement 10 degrés.

3. Système de sécurité (10) selon la revendication 1 ou 2,
**caractérisé en ce que**
le premier composant (14) est un manchon baladeur pour un frein à griffes d'un dispositif de transmission, dans lequel le second composant (16) est un piston d'actionnement pour le manchon baladeur ou un élément de liaison entre le manchon baladeur et le piston d'actionnement.

4. Système de sécurité (10) selon la revendication 3,
**caractérisé en ce que**
le piston d'actionnement et l'élément de liaison sont réalisés d'un seul tenant l'un avec l'autre.

5. Système de sécurité (10) selon la revendication 3,
**caractérisé en ce que**
l'élément de liaison et le piston d'actionnement sont réalisés séparément l'un de l'autre et sont reliés l'un à l'autre de manière immobile et de manière solidaire en rotation l'un par rapport à l'autre dans la direction axiale (58) de la bague de sécurité (12).

6. Système de sécurité (10) selon l'une des revendications précédentes,
**caractérisé en ce que**
le premier composant (14) présente sur sa circonférence extérieure une nervure s'étendant dans la direction circonférentielle (42) du premier composant (14).

7. Système de sécurité (10) selon l'une des revendications précédentes,
**caractérisé en ce que**
la bague de sécurité (12) est formée à partir d'une barre profilée à section transversale constante.

8. Véhicule automobile, comportant un système de sécurité (10) selon l'une des revendications précédentes.
